# EUROPÄISCHE PATENTSCHRIFT

(11) **EP 0 897 365 B1**
(45) Veröffentlichungstag und Bekanntmachung des Hinweises auf die Patenterteilung: **13.10.1999**
(21) Anmeldenummer: 97922944.0
(22) Anmeldetag: 02.05.1997
(51) Int. Cl.: B64C 27/605

(54) **HUBSCHRAUBERTAUMELSCHEIBE MIT INTEGRIERTER PUMPE**
HELICOPTER SWASH PLATE WITH INTEGRATED PUMP
PLATEAU OSCILLANT A POMPE INTEGREE POUR HELICOPTERE

(30) Priorität: 10.05.1996 DE 19618810
(43) Veröffentlichungstag der Anmeldung: 24.02.1999
(73) Patentinhaber: ZF Luftfahrttechnik GmbH, 34379 Calden (DE)
(72) Erfinder: SCHREIBER, Thomas, D-34127 Kassel (DE)
(74) Vertreter: Zietlow, Karl-Peter
(86) Internationale Anmeldenummer: EP9702254
(87) Internationale Veröffentlichungsnummer: WO9743177

(56) Entgegenhaltungen:
- EP-A- 0 471 098
- WO-A-95/16167
- DE-U- 8 909 165
- GB-A- 2 032 374

## Beschreibung

Die Erfindung betrifft einen Hubschrauber mit den Merkmalen nach dem Oberbegriff von Anspruch 1.

Das Kernstück eines Hubschraubers ist sein Hauptrotor. Er sorgt mit seinen zwei und mehr Rotorblättern, die an einem Rotorkopf angelenkt und um ihre Längsachse schwenkbar gelagert sind, nicht nur für den Auftrieb, sondern auch für den Vortrieb. Um eine Schubkraft für den Auftrieb zu erzeugen bzw. zu erhöhen, werden die Rotorblätter kollektiv, d. h. synchron um einen Winkel zur Rotorblattebene, angestellt. Der Vortrieb des Luftfahrzeuges wird durch Neigung des Schubvektors anhand der zyklischen, d. h. einer drehzahlsynchron alternierenden Einsteuerung und der daraus folgenden geringfügigen Kippung der Rotorblattspitzenebene aus dem horizontalen Zustand erzeugt.

Der Hubschrauberpilot steuert die Rotorblätter über eine Taumelscheibe an, die den Hauptrotormast umfaßt. Sie besteht aus einem stationären Teil, der über eine sogenannte Schere drehfest, aber axial verschiebbar sowie zum Rotormast in alle Richtungen schwenkbar am Gehäuse eines Getriebes befestigt ist, und einem drehbaren Teil, der über Radial- und Axiallager gegenüber dem stationären Teil drehbar gelagert ist. Der drehbare Teil bewegt sich mit dem stationären Teil in axialer Richtung und macht ebenfalls die Kippbewegungen mit. Er ist über eine weitere Schere am Rotorkopf befestigt.

Die Bewegung der Taumelscheibe wird über einen Hebelmechanismus auf die in Rotorblattanströmung vor oder hinter den Blattaufnahmen liegenden Blattanschlüsse übertragen, und zwar in der Weise, daß sich der Einstellwinkel des Rotorblattes mit Annäherung der Taumelscheibe vergrößert bzw. verkleinert.

Der Hubschrauberpilot verstellt für die Flugmanöver die Taumelscheibe über einen weiteren Hebelmechanismus. Parallel zu diesem sind bei fortschrittlichen Rotorsystemen hydraulische Servomotoren angeordnet, die zum einen die Ansteuerung erleichtern und zum anderen eine überlagerte Regelung ermöglichen, die auftretenden Rotorblattschwingungen entgegenwirkt. Zu diesem Zweck dienen auch Servomotoren und aktive hydraulische Dämpfer, die im rotierenden System angeordnet sind und einzelne Rotorblätter individuell ansteuern.

Ein oder mehrere Gasturbinen treiben den Hauptrotor über ein Getriebe und einen Hauptrotormast an, der im Gehäuse des Getriebes drehbar gelagert ist und an dem der Rotorkopf befestigt ist.

Die hydraulischen Motoren und aktiven Dampfer benötigen eine hydraulische Leistung von ca. 1 % der Hauptrotorleistung. Hierfür werden separate Pumpen verwendet. Diese haben ein erhebliches Gewicht und beanspruchen nennenswerten Bauraum. Ferner sind die Zuleitungen zu den Verbrauchern oft lang und komplex, insbesondere, wenn sie von einem stationären Teil zu einem drehenden Teil führen.

Der Erfindung liegt die Aufgabe zugrunde, die hydraulischen Motoren und aktiven Dampfer mit der erforderlichen Leistung zu versorgen, Gewicht einzusparen, den Bauaufwand zu verringern und den Wirkungsgrad zu verbessern.

Sie wird gemäß der Erfindung durch die Merkmale des Anspruchs 1 gelöst.

Bei dem erfindungsgemäßen Hubschrauber wird die Relativbewegung zwischen den beiden Teilen der Taumelscheibe zum Antrieb einer Pumpe genutzt. Obwohl alle Arten von Pumpen möglich sind, die den erforderlichen Druck erzeugen können, sind Hubkolbenpumpen sowohl in axialer als auch in radialer Bauweise besonders geeignet. In diesem Fall bilden die Leistungsteile Kolben und Zylinder einen Arbeitsraum. Die Kolben werden von einer Nockenbahn an einer Scheibe bei Axialkolbenpumpen und an einem Ring bei einer Radialkolbenpumpe betätigt. Dadurch vergrößern und verkleinern sich die Arbeitsräume, wodurch der Pumpeffekt erzeugt wird.

Die Lage der Pumpe zeichnet sich dadurch aus, daß das Bauvolumen der Taumelscheibe nicht oder allenfalls nur sehr geringfügig vergrößert wird. Ferner sind die Verbindungskanäle zu den Verbrauchern sowohl im stationären Teil des Hubschraubers als auch im rotierenden System sehr kurz. Wird die Pumpe nur für die Versorgung der Verbraucher im rotierenden System verwendet, werden die Zylinder zweckmäßigerweise im drehbaren Teil der Taumelscheibe angeordnet, weil dadurch aufwendige Druckölverbindungen zwischen den sich relativ zueinander drehenden Teilen vermieden werden.

Da die Drehzahl des Hauptrotors durch die Belastbarkeit der Rotorblätter und die sich daraus ergebende Umfangsgeschwindigkeit an den Rotorblätterenden begrenzt ist, muß eine ausreichende Anzahl von Zylindern und/oder Nocken auf den Umfang in ein oder Zweireihenanordnung verteilt werden. Durch zahlreiche Zylindereinheiten erreicht man einen gleichmäßigen Volumenstrom, der die Gefahr vermeidet, Schwingungen anzuregen. Ferner wird die Gefahr reduziert, wenn die Zylinder unregelmäßige Abstände (ungleiche Zahl von Zylinder und Nocken) voneinander aufweisen.

Zweckmäßigerweise haben die Kolben ballige Stirnflächen, mit denen sie auf den Nockenbahnen gleiten, damit sie diesen besser folgen können. Wälzkörper in Form von Kugeln oder Rollen sowie Wälzlager können sinnvollerweise die Reibung und den Verschleiß verringern.

Die Nockenbahn, insbesondere die Lauffläche der Kolben, wird gegen Verschmutzungen geschützt und ihre Schmierung sichergestellt, wenn die Nockenbahn zwischen nach außen abgedichteten Radial- bzw. Axiallagern angeordnet ist.

Für unterschiedliche Einsätze und Betriebsbedingungen ist es zweckmäßig, daß die Pumpe in ihrer Leistung den Anforderungen angepaßt werden kann. Gemäß einem Vorschlag läßt sich dies erreichen, indem die Pumpe durch Ventile gesteuert wird und einzelne Zylinder in Reihe oder parallel geschaltet oder kurzgeschlossen werden. Blattfederventile sind leicht, beanspruchen wenig Platz und können einfach hergestellt werden. Besonders energiesparend ist eine Volumenstromregelung auf der Saugseite der Pumpe.

Auf der Druckseite der Pumpe verbindet ein Ringkanal die Auslaßkanäle der einzelnen Zylinder. Es können aber auch mehrere Ringkanäle vorgesehen sein, die gruppenweise die Zylinder zusammenfassen. Die Ringkanäle können gleichzeitig als Sammelräume für das Drucköl dienen und gegebenenfalls als Tilgerräume gestaltet sein, um Schwingungen zu dämpfen und den Volumenstrom zu glätten.

Aus sicherheitstechnischen Gründen darf die Pumpe den Rotor nicht blockieren. Es ist daher gemäß einer Ausgestaltung vorgesehen, daß die Scheibe bzw. der Ring mit der Nockenbahn mittels Scherstiften oder einem ähnlichen Sollbruchelement mit der Taumelscheibe verbunden ist. Eine gleiche Lösung besteht darin, daß zwischen den Kolben und der Nockenbahn elastische Elemente angeordnet sind, die überdrückt werden, sobald der maximal zulässige Druck überschritten wird.

Für den Fall, daß die Pumpe ausfällt, kann die primäre Steueraufgabe des Hubschraubers mit der mechanischen Anlenkung der Taumelscheibe aufrechterhalten werden. Sollten jedoch primäre Aufgaben, wie Schmierung, Trimmung oder Schwenkdämpfung, im Rotorkopf übernommen worden sein, so ist es zweckmäßig, einen Druckspeicher vorzusehen, der die Druckversorgung im Notfall wenigstens für eine begrenzte Zeit aufrechterhält und eine sichere Landung des Fluggerätes ermöglicht.

In der Zeichnung ist ein Ausführungsbeispiel der Erfindung dargestellt.

Es zeigt:

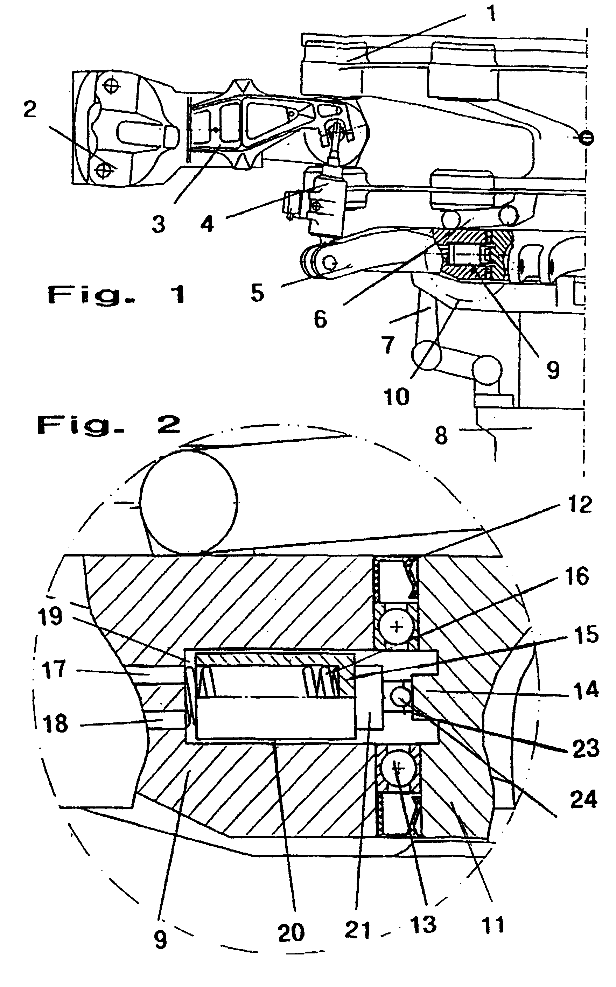

- Fig. 1: eine Teilansicht eines Hubschraubergetriebes;
- Fig. 2: einen Ausschnitt 10 nach Fig. 1 und

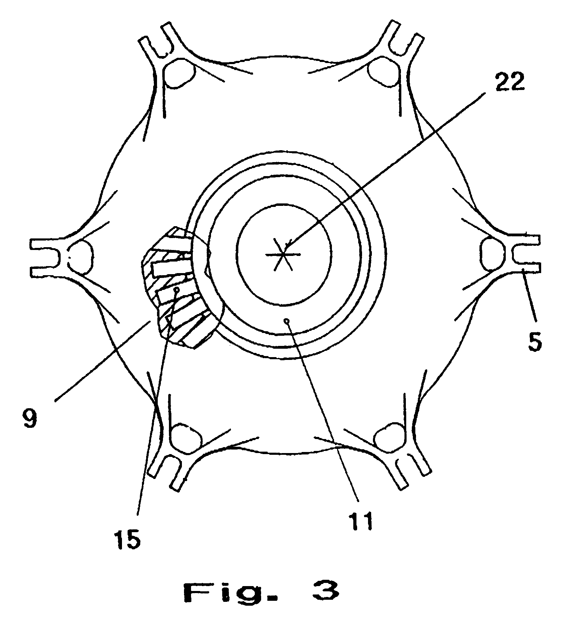

- Fig. 3: einen drehbaren Teil einer Taumelscheibe.

Mit 1 ist ein Rotorkopf eines Hauptrotors eines Hubschraubers bezeichnet, an dem nicht näher dargestellte Rotorblätter jeweils über eine Rotorblattaufnahme 2 angelenkt sind. Diese hat einen Schwenkhebel 3, mit dem sie mit dem Rotorblatt um dessen Längsachse schwenkbar ist.

An dem Schwenkhebel 3 greift über ein Gelenk ein hydraulisches Stellglied 4 an, das mit seinem freien Ende an einem Arm 5 eines drehbaren Teils 9 einer Taumelscheibe angelenkt ist. Der drehbare Teil 9 ist gegenüber einem stationären Teil 11 der Taumelscheibe durch Axial- und Radiallager 13 gelagert. Dichtungen 12 dichten den Bereich der Axial- und Radiallager nach außen ab.

Eine sogenannte Schere 7 hält den stationären Teil 11 der Taumelscheibe an einem Gehäuse 8 eines Getriebes fest, läßt es aber zu, daß die Taumelscheibe axial verschoben und in alle Richtungen zum Hauptrotormast 22 schwenkbar ist. Über eine weitere Schere 6 wird der drehbare Teil 9 vom Rotorkopf 1 zur Rotation mitgenommen.

Wird die Taumelscheibe axial verschoben, so wird die Bewegung durch den Arm 5, das hydraulische Stellglied 4 und den Schwenkhebel 3 in eine Schwenkbewegung umgesetzt und alle Rotorblätter werden in ihren Anstellwinkeln kollektiv verstellt. Wird dagegen die Taumelscheibe geschwenkt, durchläuft der Einstellwinkel eines jeden Rotorblattes während einer Rotorumdrehung ein Maximum und ein Minimum. Man nennt dies eine zyklische Ansteuerung, die für verschiedene Flugzustände und eine ungleichförmige Durchströmung des Rotors eine Anpassung der Trimmbedingungen vorsieht.

Zwischen dem drehbaren Teil 9 und dem stationären Teil der Taumelscheibe ist eine mehrzylindrige Radialkolbenpumpe angeordnet. Ihre Leistungsteile, Kolben 15 und Zylinder 20, liegen im drehbaren Teil 9 und schließen Arbeitsräume 19 ein. Federn 16 drücken die Kolben 15 gegen eine Nockenbahn 23 auf einem Ring 14, der mit dem stationären Teil 11 drehfest verbunden ist. Bei der Rotation des drehbaren Teils 9 betätigen die Nocken der Nockenbahn 23 die Kolben 15, wodurch die Arbeitsraume 19 sich verkleinern und vergrößern und ein Pumpeffekt entsteht. Zwischen der Nockenbahn 23 und den Kolben 15 sind Stößel 21 vorgesehen, in denen Kugeln 24 gelagert sind. Diese vermindern die Reibung und den Verschleiß. Ferner sorgen sie dafür, daß die Kolben 15 mit ihren Stößeln 21 einer Nockenbahn 23 mit vielen Nocken gut folgen können.

Das Hydrauliköl wird über Ansaugkanäle 17 zugeführt und über Druckkanäle 18 zu den hydraulischen Stellgliedern 4 gefördert. Die Kanäle 17, 18 münden in nicht dargestellte Ringkanäle, die sowohl auf der Saugseite als auch auf der Druckseite als Sammel- und Tilgerräume ausgebildet werden können. Nicht dargestellte Ventile, die zweckmäßig als Blattfederventile ausgebildet sind, steuern die Saugseite und die Druckseite der Pumpe. Durch eine entsprechende Anordnung und Steuerung können einzelne Pumpeneinheiten in Reihe oder parallel geschaltet werden.

Der dargestellte Ring 14 mit der Nockenbahn 23 ist einstückig mit dem stationären Teil 11 ausgebildet. Um zu verhindern, daß der Rotor durch die Pumpe blockiert werden kann, ist es zweckmäßig, den Ring 14 als getrenntes Bauteil auszuführen und mit Scherstiften oder ähnlichen Sollbruchelementen drehfest mit dem stationären Teil 11 zu verbinden. Eine anderes Mittel, um ein Blockieren zu verhindern, besteht darin, daß der Stößel ein nachgiebiges Element aufweist, das von den Nocken überdrückt wird, sobald der zulässige Höchstdruck überschritten wird.

Die dargestellt Radialkolbenpumpe kann in der Weise modifiziert werden, daß die Nockenbahn 23 im drehbaren Teil liegt und die Zylinder 20 und die Kolben 15 im stationären Teil 11 angeordnet sind. Sie unterliegen dann keinen Zentrifugalkräften. Ferner können die Kolben 15 und Zylinder 20 nach Art einer Axialkolbenpumpe achsparallel zur Rotationsachse angeordnet werden. Schließlich könnten auch andere Pumpenarten, z. B. Flügelzellenpumpen usw., eingesetzt werden.

### Bezugszeichen

- 1: Rotorkopf
- 2: Rotorblattaufnahme
- 3: Schwenkhebel
- 4: hydraulisches Stellglied
- 5: Arm
- 6: Schere
- 7: Schere
- 8: Gehäuse
- 9: drehbarer Teil der Taumelscheibe
- 10: Ausschnitt
- 11: stationärer Teil der Taumelscheibe
- 12: Dichtung
- 13: Radial-/Axiallager
- 14: Ring
- 15: Kolben
- 16: Federn
- 17: Ansaugkanal
- 18: Druckkanal
- 19: Arbeitsraum
- 20: Zylinder
- 21: Stößel
- 22: Hauptrotormast
- 23: Nockenbahn
- 24: Wälzkörper

## Patentansprüche

1. Hubschrauber mit folgenden Merkmalen:
- an einem Rotorkopf (1) eines Hauptrotors sind zwei oder mehr Rotorblätter angelenkt,
- der Rotorkopf (1) ist an einem Hauptrotormast (22) befestigt, der in einem Gehäuse (8) eines Getriebes drehbar gelagert ist,
- eine oder mehrere Gasturbinen treiben den Hauptrotormast (22) über das Getriebe an,
- eine Taumelscheibe umfaßt den Hauptrotormast (22) und ist mit ihrem stationären Teil (11) drehfest, aber axial verschiebbar und zur Achse des Hauptrotormastes (22) in allen Richtungen schwenkbar gelagert,
- ein drehbarer Teil (9) der Taumelscheibe, der am Rotorkopf (1) drehfest angelenkt ist, ist gegenüber dem stationären Teil (11) der Taumelscheibe über Axial- und Radiallager (13) drehbar gelagert,
dadurch **gekennzeichnet**, daß zwischen dem stationären Teil (11) und dem drehbaren Teil (9) der Taumelscheibe eine Pumpe angeordnet ist, deren Leistungsteile durch die relative Bewegung der Teile (9, 11) der Taumelscheibe ihre Lage zueinander derart verändern, daß in dem von ihnen gebildeten Arbeitsraum (19) ein Pumpeffekt entsteht.

2. Hubschrauber nach Anspruch 1, dadurch **gekennzeichnet,** daß die Pumpe eine mehrzylindrige Hubkolbenpumpe ist, deren Kolben (15) in Zylinder (20) geführt sind und über eine Scheibe bzw. einen Ring (14) mit einer Nockenbahn (23) betätigt werden, wobei die Zylinder (20) und die Nockenbahn (23) an verschiedenen Teilen der Taumelscheibe angeordnet sind.

3. Hubschrauber nach Anspruch 2, dadurch **gekennzeichnet,** daß die Zylinder (20) im drehbaren Teil (9) der Taumelscheibe angeordnet sind.

4. Hubschrauber nach Anspruch 2, dadurch **gekennzeichnet,** daß die Zylinder (20) in unregelmäßigen Abständen auf den Umfang verteilt sind.

5. Hubschrauber nach Anspruch 2, dadurch **gekennzeichnet,** daß die Nockenbahn (23) zwischen den nach außen abgedichteten Radial- bzw. Axiallagern (13) angeordnet ist.

6. Hubschrauber nach Anspruch 2, dadurch **gekennzeichnet,** daß die Pumpe ventilgesteuert ist und daß durch die Ventile einzelne Zylinder (20) parallel oder in Serie geschaltet werden können.

7. Hubschrauber nach Anspruch 2, dadurch **gekennzeichnet,** daß die Kolben (15) zur Nockenbahn (23) hin ballige Flächen aufweisen.

8. Hubschrauber nach Anspruch 2, dadurch **gekennzeichnet,** daß zwischen den Kolben (15) und der Nockenbahn (23) Wälzkörper (24) oder ein Wälzlager angeordnet ist.

9. Hubschrauber nach Anspruch 2, dadurch **gekennzeichnet,** daß die Pumpe sauggeregelt ist.

10. Hubschrauber nach Anspruch 2, dadurch **gekennzeichnet,** daß je nach Leistungsanforderung einige Zylindereinheiten kurzgeschlossen werden können.

11. Hubschrauber nach Anspruch 2, dadurch **gekennzeichnet,** daß Auslaßkanäle (18) bzw. Einlaßkanäle (17) der Zylinder (20) durch Ringkanäle verbunden sind.

12. Hubschrauber nach Anspruch 2, dadurch **gekennzeichnet,** daß die Ringkanäle als Sammelräume oder Tilgeräume ausgebildet sind.

13. Hubschrauber nach Anspruch 6, dadurch **gekennzeichnet,** daß die Ventile als Blattfederventile ausgebildet sind.

14. Hubschrauber nach Anspruch 13, dadurch **gekennzeichnet,** daß die Blattfederventile zu Gruppen miteinander verbunden sind.

15. Hubschrauber nach einem der vorangehenden Ansprüche 2-14, dadurch **gekennzeichnet,** daß ein Pumpenantriebselement, der Ring (14) mit der Nockenbahn (23), mittels Sollbruchelementen mit der Taumelscheibe verbunden ist.

16. Hubschrauber nach einem der vorangehenden Ansprüche, dadurch **gekennzeichnet,** daß zwischen dem Pumpenantriebselement und einem Förderglied, dem Kolben (15), ein nachgiebiges Element vorgesehen ist, das vom Antrieb überdrückt wird, sobald der maximal zulässige Druck überschritten wird.

## Claims

1. Helicopter having the following features:
- two or more rotor blades are coupled to a rotor head (1) of a main rotor,
- the rotor head (1) is fastened to a main rotor mast (22), which is rotatably supported in a casing (8) of a gearbox,
- one or more gas turbines drive the main rotor mast (22) via the gearbox,
- a swash plate embraces the main rotor mast (22) and is supported by its stationary part (11) so as to be locked against rotation but axially displaceable and capable of swivelling in all directions relative to the axis of the main rotor mast (22),
- a rotatable part (9) of the swash plate, which is non-rotatably coupled to the rotor head (1), is supported by means of thrust and radial bearings (13) so as to be rotatable relative to the stationary part (11) of the swash plate,
characterized in that disposed between the stationary part (11) and the rotatable part (9) of the swash plate is a pump, the power parts of which as a result of the relative movement of the parts (9, 11) of the swash plate alter their position relative to one another in such a way that in the working chamber (19) formed by them a pumping effect is produced.

2. Helicopter according to claim 1, characterized in that the pump is a multi-cylinder reciprocating piston pump, the pistons (15) of which are guided in cylinders (20) and operated by means of a disc or a ring (14) with a cam track (23), wherein the cylinders (20) and the cam track (23) are disposed on different parts of the swash plate.

3. Helicopter according to claim 2, characterized in that the cylinders (20) are disposed in the rotatable part (9) of the swash plate.

4. Helicopter according to claim 2, characterized in that the cylinders (20) are distributed at irregular intervals over the periphery.

5. Helicopter according to claim 2, characterized in that the cam track (23) is disposed between the outwardly sealed radial and/or thrust bearings (13).

6. Helicopter according to claim 2, characterized in that the pump is valve-controlled and that individual cylinders (20) may be connected in parallel or in series by means of the valves.

7. Helicopter according to claim 2, characterized in that the pistons (15) have crowned surfaces directed towards the cam track (23).

8. Helicopter according to claim 2, characterized in that rolling bodies (24) or a rolling-contact bearing is disposed between the pistons (15) and the cam track (23).

9. Helicopter according to claim 2, characterized in that the pump is suction-controlled.

10. Helicopter according to claim 2, characterized in that depending on the power requirement, several cylinder units may be short-circuited.

11. Helicopter according to claim 2, characterized in that outlet channels (18) and/or inlet channels (17) of the cylinders (20) are connected by annular channels.

12. Helicopter according to claim 2, characterized in that the annular channels are designed as collecting chambers or absorbing chambers.

13. Helicopter according to claim 6, characterized in that the valves take the form of leaf spring valves.

14. Helicopter according to claim 13, characterized in that the leaf spring valves are connected into groups with one another.

15. Helicopter according to one of the preceding claims 2 - 14, characterized in that a pump drive element, the ring (14) with the cam track (23), is connected by rupture elements to the swash plate.

16. Helicopter according to one of the preceding claims, characterized in that provided between the pump drive element and a feed member, the piston (15), is a resilient element which is overcompressed by the drive as soon as the maximum admissible pressure is exceeded.

## Revendications

1. Hélicoptère ayant les caractéristiques suivantes
- deux ou plus de pales du rotor sont articulées sur une tête de rotor (1) d'un rotor principal,
- la tête de rotor (1) est fixée à un mât du rotor principal (22), lequel est monté de façon rotative dans un carter (8) d'une transmission,
- une ou plusieurs turbines à gaz entraînent le mât du rotor principal (22) par l'intermédiaire de la transmission,
- un plateau oscillant entoure le mât du rotor principal (22) et est monté par sa partie stationnaire (11) de façon non rotative, mais pouvant coulisser dans le sens axial et pivotant dans tous les sens par rapport à l'axe du mât du rotor principal (22),
- une partie rotative (9) du plateau oscillant, laquelle est articulée de façon non rotative sur la tête de rotor (1), est montée au moyen de paliers axiaux et radiaux (13) de façon rotative par rapport à la partie stationnaire (11) du plateau oscillant,
**caractérisé en ce que,** entre la partie stationnaire (11) et la partie rotative (9) du plateau oscillant est disposée une pompe dont les éléments performants, en raison du mouvement relatif des parties (9, 11) du plateau oscillant, changent leur position l'une par rapport à l'autre de telle manière qu'un effet de pompe se forme dans la chambre de travail (19) ainsi formée.

2. Hélicoptère selon la revendication 1, **caractérisé en ce que** la pompe est une pompe à piston alternatif à plusieurs cylindres dont les pistons (15) sont guidés dans des cylindres (20) et sont actionnés par l'intermédiaire d'un disque, respectivement d'une bague (14) par un chemin de cames (23), les cylindres (20) et le chemin de cames (23) étant disposés sur différentes parties du plateau oscillant.

3. Hélicoptère selon la revendication 2, **caractérisé en ce que** les cylindres (20) sont disposés dans la partie rotative (9) du plateau oscillant.

4. Hélicoptère selon la revendication 2, **caractérisé en ce que** les cylindres (20) sont distribués à distances irrégulières sur la périphérie.

5. Hélicoptère selon la revendication 2, **caractérisé en ce que** le chemin de cames (23) est disposé entre les paliers axiaux, respectivement radiaux (13), étanches vers l'extérieur.

6. Hélicoptère selon la revendication 2, **caractérisé en ce que** la pompe est commandée par des soupapes et que les soupapes permettent de commander les cylindres (20) individuellement en parallèle ou en série.

7. Hélicoptère selon la revendication 2, **caractérisé en ce que** les pistons (15) présentent des surfaces bombées à leur côté tourné vers le chemin de cames (23).

8. Hélicoptère selon la revendication 2, **caractérisé en ce que** des corps à roulement (24) ou un palier à roulement est disposé entre les pistons (15) et le chemin de cames (23).

9. Hélicoptère selon la revendication 2, **caractérisé en ce que** la pompe est à aspiration réglée.

10. Hélicoptére selon la revendication 2, **caractérisé en ce que** certaines unités de cylindres peuvent être court-circuitées en fonction de la demande de puissance.

11. Hélicoptère selon la revendication 2, **caractérisé en ce que** des conduits de sortie (18), respectivement des conduits d'admission (17) des cylindres (20) sont reliés par des conduits annulaires.

12. Hélicoptère selon la revendication 2, **caractérisé en ce que** les conduits annulaires sont formés par des espaces collecteurs ou espaces d'absorption.

13. Hélicoptère selon la revendication 6, **caractérisé en ce que** les soupapes sont constituées par des soupapes à ressorts à lames.

14. Hélicoptère selon la revendication 13, **caractérisé en ce que** les soupapes à ressorts à lames sont reliées entre elles par groupes.

15. Hélicoptère selon l'une des revendications 2 à 14, **caractérisé en ce qu**'un élément d'entraînement de la pompe, la bague (14) avec le chemin de cames (23), est relié au plateau oscillant au moyen d'éléments destinés à la rupture.

16. Hélicoptère selon l'une des revendications précédentes, **caractérisé en ce qu**'un élément flexible est prévu entre l'élément d'entraînement de la pompe et un élément d'alimentation, le piston (15), lequel est court-circuité par l'entraînement dès que la pression maximale admissible est dépassée.
